Europäisches Patentamt

European Patent Office

Office européen des brevets

(19)

(11) Publication number: **0 033 557**
**B1**

(12) **EUROPEAN PATENT SPECIFICATION**

(45) Date of publication of patent specification: **02.01.85**

(21) Application number: **81200051.1**

(22) Date of filing: **16.01.81**

(51) Int. Cl.⁴: **G 01 N 37/00, C 23 F 14/00**

(54) **A method and apparatus for testing the effectiveness of chemicals such as scale inhibitors or scale removers.**

(30) Priority: **31.01.80 GB 8003268**

(43) Date of publication of application:
**12.08.81 Bulletin 81/32**

(45) Publication of the grant of the patent:
**02.01.85 Bulletin 85/01**

(84) Designated Contracting States:
**BE DE FR IT LU NL**

(56) References cited:
**CH-A- 512 591**
**DE-A-2 403 188**
**DE-A-2 758 831**
**DE-C-1 096 079**
**US-A-2 571 470**

(73) Proprietor: **SHELL INTERNATIONALE
RESEARCH MAATSCHAPPIJ B.V.
Carel van Bylandtlaan 30
NL-2596 HR Den Haag (NL)**

(72) Inventor: **Zeelenberg, Johannes Peter Wouter
Volmerlaan 6
NL-2288 GD Rijswijk (NL)**
Inventor: **de Koning, Willem Gerard
Volmerlaan 6
NL-2288 GD Rijswijk (NL)**

(74) Representative: **Puister, Antonius Tonnis, Mr.
et al
P.O. Box 302
NL-2501 CH The Hague (NL)**

EP 0 033 557 B1

Courier Press, Leamington Spa, England.

0 033 557

**Description**

The invention relates to a method and apparatus for testing the effectiveness and performance of scale inhibitors or scale removers which can be added to liquids to prevent undesired phenomena, such as deposits, which may occur in, for example, flow lines or equipment used in the boiler feed water industry, power plants, etc. under certain circumstances.

The invention relates in particular to a method and apparatus for testing the effectiveness and performance of various scale inhibitors or scale removers. When a liquid flows through a flow line scale formation and deposition may occur in the flow line and scale could adhere to the flow line wall. The deposition of scales, in particular mineral scales, such as $CaCO_3$, $CaSO_4$ and $BaSO_4$ from a scale-forming liquid is a major problem in liquid-consuming and/or liquid-producing processes. Serious damage is often caused by such scales to all kinds of equipment, including valves, heat exchangers, pumps, etc., which are used in said liquid-consuming and/or liquid producing processes.

Scale inhibitors are widely applied in order to prevent scale formation and scale deposition from a scale-forming liquid. Scale removers are applied to remove scale, which has been deposited from the liquid.

Liquid-consuming processes are for example carried out in oil fields. In particular a liquid, such as water, is consumed in large quantities, said water, for example, being used for water flooding in oil reservoirs.

Water flooding is a known technique to improve the oil field production and will not be described here in detail. Further, most oil fields produce not only oil, but also water. Waters used for water flooding just as produced oil field waters often form scale deposits in wells and flow lines. Some of the most serious problems due to scale formation in oil field systems are stuck downhole pumps, plugged well bores, plugged tubing strings and perforations, stuck valves, plugged flow lines, etc.

At the moment these scale problems show up, it is usually too late for a simple cleaning job and costly repairs of sometimes complicated systems may be required.

In practice, scale prevention is done by the injection of various commercially available chemicals into the produced oil field water and/or the water used for water flooding.

Many chemical service companies are offering scale inhibitors for which they claim a certain performance. This performance, however, can only be verified after application in practice for some time and it is very difficult and time consuming to carry out in the field an evaluation of a number of scale inhibitors. So, testing the effectiveness and performance of scale inhibitors is therefore usually restricted to laboratory tests on model water systems.

The object of the invention is providing a method for testing the effectiveness and performance of commercially available scale inhibitors and their compatibility with other chemicals, such as oxygen scavengers, demulsifiers, biocides on location to assist in the selection of the most effective chemicals.

Another object of the invention is providing a compact apparatus for testing the performance of a number of commercially available scale inhibitors on location.

Another object of the invention is providing an apparatus and a method for selection and ranking of available scale inhibitors and for regular quality-control checks on chemicals.

Another object of the invention is providing a method and an apparatus for testing the effectiveness and performance of scale removers.

The invention therefore relates to an apparatus for testing the effectiveness and performance of scale inhibitors or scale removers in a scale-forming liquid characterized by at least one flow line, in which a test circuit is present, at least one means adapted to supply a constant flow of a scale-forming liquid from a storage vessel through the flow line at a given flow rate, at least one means adapted to add chemicals to the liquid, at least one means adapted to measure continuously the inlet pressure to the test circuit during a predetermined time and means adapted to record the measured pressure values, at a controlled temperature.

The invention further relates to a method for testing the effectiveness and performance of scale inhibitors in a scale-forming liquid, characterized by the steps of supplying at a given flow rate the liquid through a flow line, in which a test circuit is placed, measuring and recording continuously the inlet pressure to the test circuit during a predetermined time at a controlled temperature, thus obtaining data, which indicate the tendency of scale forming of the liquid in the test circuit, adding subsequently the chemicals to be tested in successively different concentrations to the liquid, at each addition measuring and recording continuously the pressure to a predetermined length of the flow line, which length serves as the test circuit, at a controlled temperature during a predetermined time, thus obtaining a set of data which indicate the tendency of scale forming of the liquid in the test circuit after the chemicals have been added.

The invention further relates to a method for testing the effectiveness and performance of scale removers in a scale-forming liquid characterized by the steps of supplying at a given flow rate the liquid through a flow line, comprising a test circuit, subsequently removing scale in the test circuit after said scale has been deposited from the liquid, by adding suitable chemicals to the test circuit and at each addition continuously measuring and recording the pressure decrease in the test circuit, thus obtaining a set of data which represent the tendency of scale-removing from the liquid.

2

By application of the technique according to the invention commercially available scale inhibitors and scale removers can be tested and ranked in the field in a simple, reliable and cheap manner.

From DE—A—2,758,831 a method and apparatus for measuring deposits such as scale, wax, paraffin, etc. on surfaces are known. According to this citation a thermical bridge is used in order to compare the heat transfer properties of the surfaces to be investigated. However, this citation does not mention at all the application of pressure measurement.

The invention is based upon the measurement of the rate of plugging of a test circuit by scale deposition and adherence to the test circuit wall. The test circuit is a part of a flow line and has, for example, a metal wall or a glass wall.

In pumping a liquid through a flow line a certain pressure drop exists over a predetermined part of the flow line which serves as the test circuit. This pressure drop is known, because the inlet pressure to the test circuit is measured and the outlet pressure of the test circuit is atmospheric.

When water flows through a flow line at a given flow rate without using a scale inhibitor, scale (for example $CaCO_3$ scale) is formed in the test circuit and could adhere to the circuit wall. The inside diameter of the test circuit will subsequently be reduced, which results in an increase in pressure drop across the test circuit.

According to the invention the pressure to the inlet of the test circuit is measured continuously and the measured pressure is recorded during a predetermined time, giving the change in pressure drop across the test circuit. Said predetermined time may be adjusted by means of a time adjuster. The predetermined time may be set arbitrarily. The results of the pressure measurements and recordings and the time adjustments are represented in any suitable manner. This may be done for example in a graphical manner which results in a pressure drop versus time curve. The only criterion taken is whether an inlet pressure increase can be noticed or not. The time required to build up a certain pressure drop represents the tendency of scale forming and deposition in the liquid.

When a certain dosage of a scale inhibitor having a predetermined concentration is injected along with the water, the pressure build-up is retarded or completely absent. Again the inlet pressure is measured and recorded continuously during a predetermined time and represented for example in a pressure drop versus time curve. The time required to build up a certain pressure drop compared with the data obtained for the scale-forming liquid gives a reliable indication of the effectiveness of the scale inhibitor. The longer the time, the better the scale inhibitor at given test conditions. This procedure is repeated for a plurality of different concentrations of the said scale inhibitor and subsequently for a plurality of scale inhibitors at various concentrations and the obtained pressure drop versus time curves at various concentrations of scale inhibitors are found to be related to the effectiveness of the chemical added.

To compare "inhibitive performances" of the various chemicals it is necessary to use a "blank" liquid, i.e. a well-defined liquid with reproducible scaling performance within a certain time, said "blank" liquid should be the same liquid, to which the scale inhibitors are added. For this purpose tap water may be used.

Other suitable "blank" scale-forming waters may be used, for example artificial sea water. To achieve a distinct pressure build-up within a certain time the scaling tendency of these "blank" test waters involved may be increased by addition of a certain dosage of scale-forming ions, for example carbonate ions.

When a scale inhibitor has proven to be effective at a certain dosage rate, it is possible to investigate other chemicals with respect to their compatibility with the scale inhibitor by injecting those chemicals at the same time.

The present invention will now be described by way of example in more detail with reference to the drawings, in which:

fig. 1a shows schematically an example of the apparatus according to the invention;

fig. 1b shows schematically another example of the apparatus according to the invention;

fig. 2 represents a pressure drop versus time curve showing the scaling tendency of two suitable test waters;

fig. 3 represents a pressure drop versus time curve, representing the influence of addition of a certain scale inhibitor having a predetermined concentration to the test waters, which are used in the apparatus as represented in figs. 1a and 1b;

fig. 4 shows a similar curve as was shown in fig. 3, but in this example a higher concentration of scale inhibitor was added;

fig. 5 shows a similar curve as was shown in fig. 3 and fig. 4, but in this example a higher concentration of scale inhibitor was added than in case of fig. 4;

fig. 6 shows a pressure drop increase versus concentration inhibitor curve, representing the pressure drop increase after 4 hours' testing in tap water.

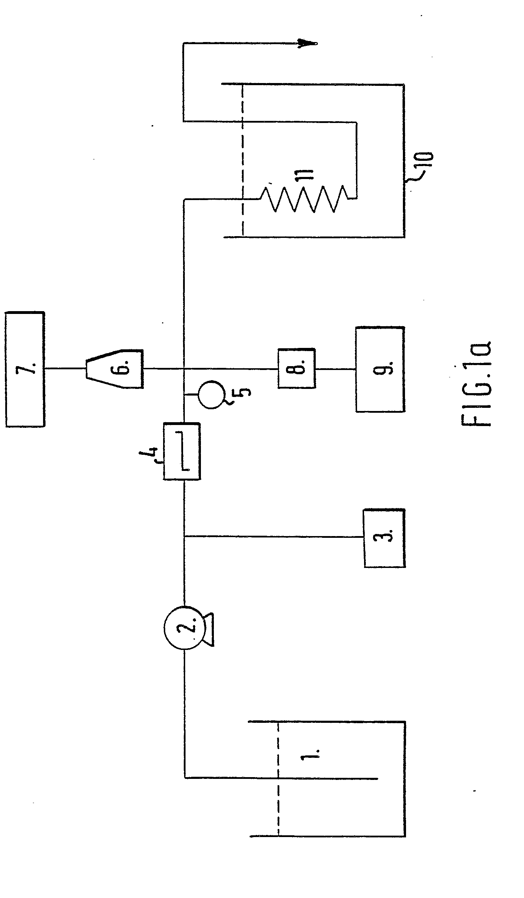

Referring now to fig. 1a an apparatus for testing scale inhibitors or scale removers is shown schematically.

From a suitable storage vessel 1 water is pumped by any suitable pump 2 into a flow line at a flow rate of 1.6 l/h.

By means of a chemical dosage pump 3 chemicals in various concentrations such as scale

3

inhibitors or scale removers, can be added to the water. To achieve a good mixing intensity between the chemical to be tested and the scale-forming liquid an in-line magnetic stirrer 4 is installed in the flow line.

The pressure drop across the flow line is indicated by a pressure gauge 5 and may also be registered on a recorder 7 by means of a pressure transducer 6 which converts a mechanical signal into an electrical one.

For safety reasons a safety pressure switch 8 which is connected in any suitable manner to a pressure control unit 9 may be inserted in the flow line to prevent the pressure exceeding a predetermined maximum allowable pressure, in this example 1500 mbar. Upon reaching said maximum allowable pressure the total apparatus is rendered inoperative by switching off its power supply.

The duration of a test can be varied with the aid of a time adjuster, which in this example is represented together with the pressure control unit 9. The actual test circuit is placed in a thermostatic bath 10 and is represented at 11. During a test the test circuit is heated to a suitable determined temperature, in this example about 90°C. After each test the test circuit is cleaned by flushing the flow line and the circuit with any suitable liquid, for example 0.1 N hydrochloric acid.

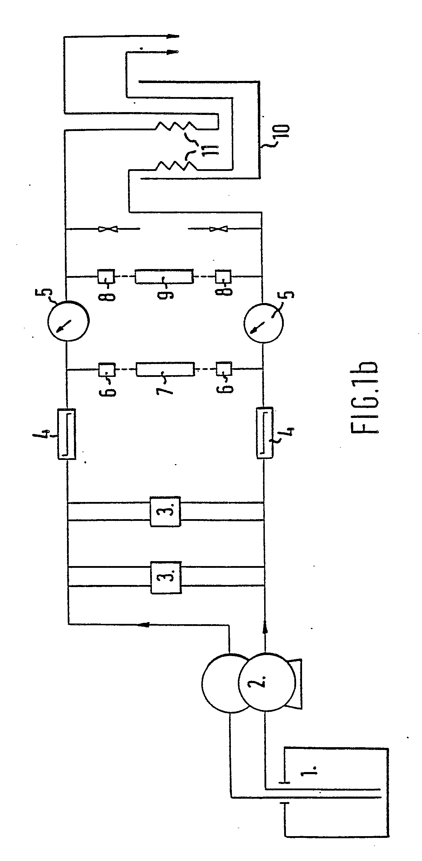

Fig. 1b shows an advantageous example of the apparatus of the invention, comprising a storage vessel 1 and each flow line having a pump 2, a chemical dosage pump 3, a stirrer 4, a pressure gauge 5, a pressure transducer 6, a pressure switch 8 and a test circuit 11. Both test circuits 11 are placed in a thermostatic bath 10. Both transducers 6 are connected in any suitable way with the recorder 7. Both pressure switches 8 are connected in any suitable way with the pressure control unit and time adjuster 9. Each chemical dosage pump 3 is connected in any suitable way with each flow line.

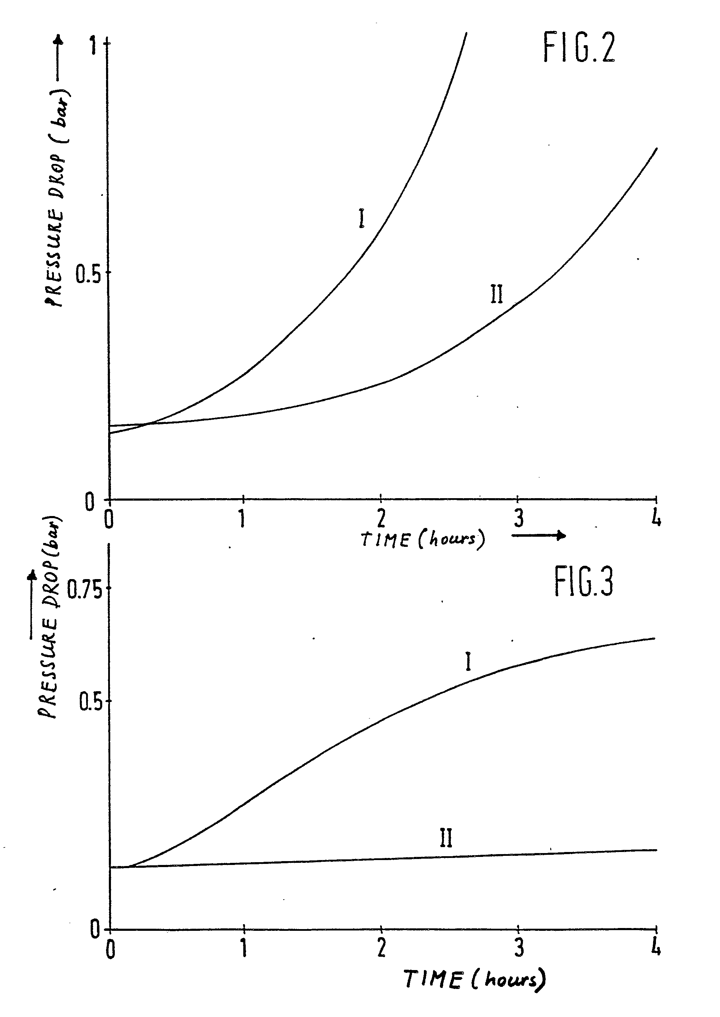

Figs. 2—6 represent the results of a number of comparative tests of a known scale inhibitor, which has been carried out with the apparatus and the method according to the invention. The inhibitor, which has been tested, was successively added to the two test waters in successive concentrations in the range of 0—20 mg/l, respectively

In fig. 2—5 the horizontal axes represent the adjusted test time in hours, whereas the vertical axes represent the obtained pressure drop in bar.

Fig. 2 represents the results of two suitable test waters, viz. tap water (curve I) and artificial sea water (curve II), both enriched with 50 mg/l dissolved carbonate. The composition of these two waters is given in Table 1 below:

TABLE 1

Composition of suitable test waters

| Component | Concentration, mg/l | |
|---|---|---|
| | Tap water | Artificial sea water |
| $Ca^{2+}$ | 93 | 396 |
| $Mg^{2+}$ | 18 | 1361 |
| $Fe^{3+}$ | not present | 0.02 |
| $SO_4^{2-}$ | 59 | 2820 |
| $Cl$ | 185 | 20500 |
| $HCO_3$ | 198 | 73 |
| $CO_3^{2}$ | not present | 17 |
| $Na^+/K^+$ | 70 | 12450 |

Fig. 3 represents the results of the addition of a certain inhibitor in a concentration of 2 mg/l to the test waters as used in fig. 2.

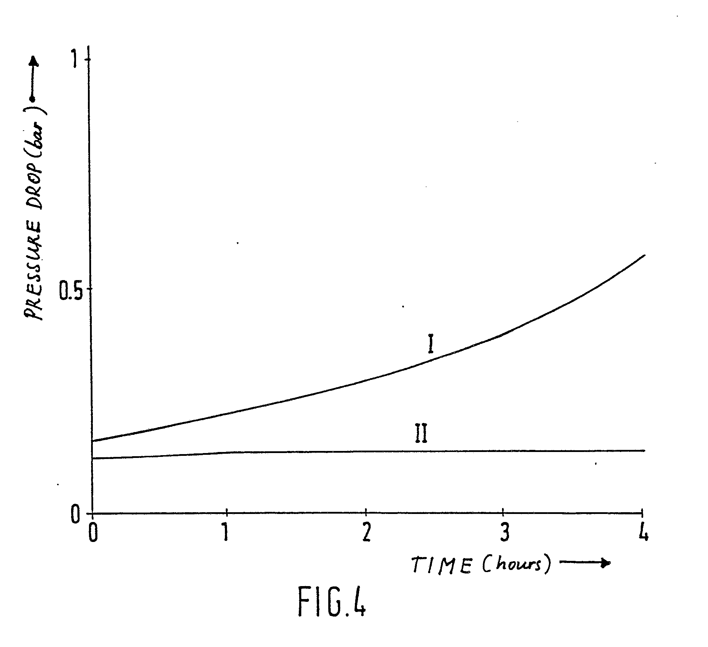

Fig. 4 represents the results of adding the same inhibitor as used in fig. 3 in a concentration of 5 mg/l.

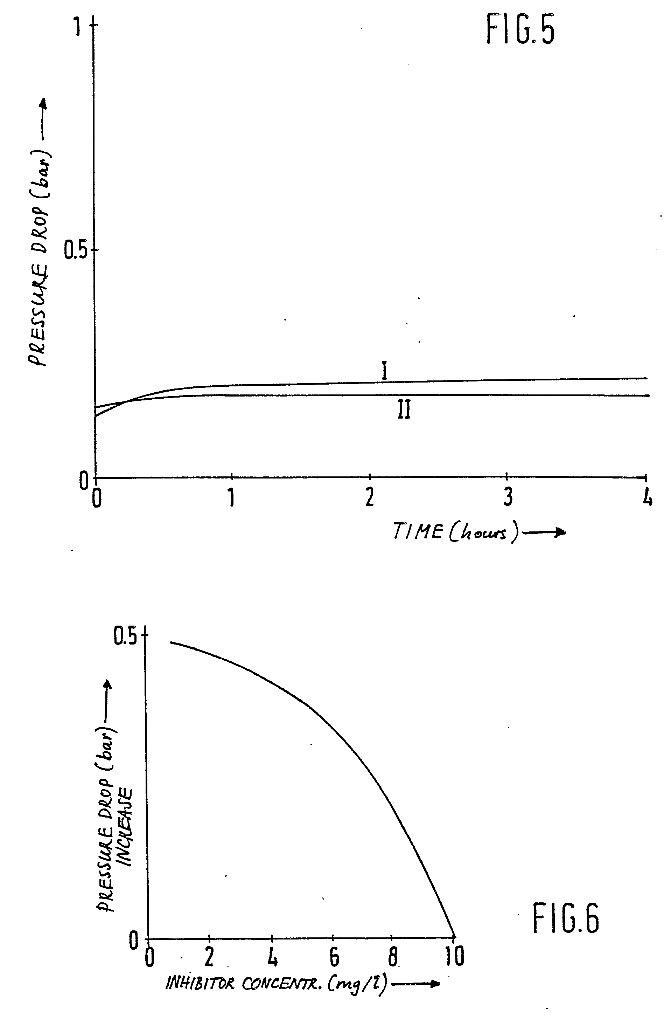

Fig. 5 represents the results of adding the same inhibitor as used in fig. 2 and fig. 3 in a concentration of 10 mg/l.

Fig. 6 shows a pressure drop increase versus concentration inhibitor curve after 4 hours testing in tap water. The vertical axis represents the pressure drop increase in bar, whereas the horizontal axis represents the inhibitor concentration in mg/l.

From the curves of figs. 2—6 it can be seen that the rate of pressure drop increase depends on the concentration of the scale inhibitor added to the water. It will be clear that no pressure drop exists if the path of the curve is horizontal, so that no plugging exists. So, the path of these curves can be considered as being related to the effectiveness and performance of the scale inhibitor.

A great variety of scale inhibitors can be tested with the apparatus of the invention. The test results of a number of scale inhibitors are summarized in Table 2 below by way of example. It will be appreciated that Table 2 is not an exhausting example.

TABLE 2

Effectiveness of commercially available scale inhibitors

| Inhibitor tested | Pressure increase in millibar after four hours testing | | | | | | Dosage (mg/l) recommended by manufacturer | Minimum dosage for complete inhibition (mg/l) | |
|---|---|---|---|---|---|---|---|---|---|
| | Concentration inhibitor (mg/l) | | | | | | | | |
| | Artificial sea water | | | Tap water | | | | Artificial sea water | Tap water |
| | 2 | 5 | 10 | 2 | 5 | 10 | | | |
| Calgon S 31 | 60 | 20 | 0 | >740 | 80 | 0 | n.a. | 10 | 10 |
| Dowell L 50 | 20 | 0 | 0 | 490 | 390 | 0 | 1— 5 | 5 | 10 |
| Dowell L 49 | 0 | 0 | 0 | >850 | 50 | 0 | 1— 5 | 2 | 10 |
| Petrolite SP 181 | 40 | 30 | 20 | 420 | 560 | 890 | n.a. | >10 | >10 |
| Cyanamid P 35 | 100 | 80 | 70 | 330 | 270 | 250 | n.a. | >10 | >10 |
| Aquachem A 920 | >700 | 290 | 20 | 170 | 100 | 0 | n.a. | >10 | 10 |
| Aquachem A 910 | 0 | 0 | 0 | 0 | 140 | 80 | 2—10 | 2 | 2 |
| Conquest 126 | 0 | 0 | 0 | 230 | 0 | 0 | 1—10 | 2 | 5 |
| Conquest 121 | 0 | 0 | 0 | 110 | 0 | 0 | 1—10 | 2 | 5 |
| Conquest 103 | 30 | 30 | 0 | 360 | 350 | 360 | 1—10 | 10 | >10 |
| Conquest 100 | 0 | 0 | 0 | 0 | 30 | 40 | 1—10 | 2 | 2 |
| Nalfloc V 950 | 100 | 0 | — | 120 | 20 | — | 4— 6 | 4 *) | >5 |

n.a. = not available.

*) Concentration from data obtained in earlier tests.

The flow line comprising the test circuit may be made of any material suitable for the purpose, for example polyethylene.

An advantageous test circuit which can be used in a stainless steel capillary test tube, 1 m long and having 1 mm inside diameter. Any wall material suitable for the purpose may be used.

The flow regions and test conditions are such that the temperature of the water entering the test circuit almost immediately approaches the temperature of the bath. The temperature of the bath can be any temperature suitable for the purpose. The water may be pumped by any suitable pump at any variable flow rates. If a stirrer is used, said stirrer may be any stirrer suitable for the purpose. Tests may be carried out with any suitable maximum allowable pressure. Any suitable pressure measuring means may be used.

The duration of a test can be any suitable time length.

A very advantageous embodiment of the apparatus of the invention comprises more than two supply lines, each line comprising a test circuit and other equipment belonging to it.

It will be appreciated that the invention is not restricted to testing scale inhibitors. The invention can also be used in an advantageous manner to test the effectiveness and performance and the compatibility of scale inhibitors with various chemicals, such as corrosion inhibitors, oxygen scavengers, biocides, etc. Further, it will be clear to those skilled in the art that any test liquid suitable for the purpose may be used. It will further be appreciated that the results of the continuous pressure measurements and recordings and time adjustments may be processed by any suitable processing means such as a computer. According to the invention it is also possible to remove scale after it has been formed in the test circuit by adding suitable chemicals to the liquid. Examples of such chemicals are crown ethers, dewaxers, etc. After said chemicals have been added to the test circuit, the pressure decrease across the test circuit is measured and recorded continuously.

## Claims

1. An apparatus for testing the effectiveness and performance of scale inhibitors or scale removers in a scale-forming liquid characterized by at least one flow line, in which a test circuit is present, at least one means adapted to supply a constant flow of a scale-forming liquid from a storage vessel to the test circuit through the flow line at a given flow rate, at least one means adapted to add chemicals to the liquid, at least one means adapted to measure continuously the inlet pressure to the test circuit during a predetermined time and means adapted to record the measured pressure values at a controlled temperature.

2. The apparatus as claimed in claim 1, characterized in that the test circuit is a capillary test tube.

3. The apparatus as claimed in claim 2, characterized in that the test tube is 1 m long and has an inside diameter of 1 mm.

4. The apparatus as claimed in any one of claims 1—3, characterized by a thermostatic bath, in which the test circuit is placed.

5. The apparatus as claimed in any one of claims 1—4, characterized by a means adapted to adjust the time during which the inlet pressure is measured and recorded.

6. A method for testing the effectiveness and performance of scale inhibitors in a scale-forming liquid, characterized by the steps of supplying at a given flow rate the liquid through a flow line, in which a test circuit is placed, measuring and recording continuously the inlet pressure to the test circuit during a predetermined time at a controlled temperature, thus obtaining data which represent the tendency of scale forming of the liquid in the test circuit, adding subsequently the chemicals to be tested in successively different concentrations to the liquid, at each addition measuring and recording continuously the pressure to a predetermined length of the flow line, which length serves as the test circuit, at a controlled temperature during a predetermined time, thus obtaining a set of data which represent the tendency of scale forming of the liquid in the test circuit after the chemicals have been added.

7. The method as claimed in claim 6, characterized by the step of comparing the obtained results after adding chemicals with the data of the "blank" liquid (i.e. a well-defined liquid with reproducible scaling performance within a certain time), which data are reference data.

8. The method as claimed in claim 6 or 7, characterized in that a dosage of a chemical is added to the "blank" liquid (i.e. a well-defined liquid with reproducible scaling performance within a certain time) to increase the scaling tendency of said liquid.

9. The method as claimed in claim 8, characterized in that a dosage of 50 mg/l carbonate ions is added to the liquid.

10. The method as claimed in any one of claims 6—9, characterized in that the chemicals to be tested are successively added in concentrations in the range of 0—20 mg/l.

11. A method for testing the effectiveness and performance of scale removers in a scale-forming liquid, characterized by the steps of supplying at a given flow rate the liquid through a flow line, comprising a test circuit, subsequently removing scale in the test circuit after said scale has been deposited from the liquid, by adding suitable chemicals to the test circuit and at each addition continuously measuring and recording the pressure decrease in the test circuit, thus obtaining a set of data which represent the tendency of scale-removing from the liquid.

12. The method as claimed in claim 11, characterized in that the added chemicals are crown ethers.

13. The method as claimed in claim 6 comprising the step of testing the compatibility of scale inhibitors with other chemicals.

## Revendications

1. Appareil pour essayer l'activité et le comportement d'inhibiteurs de la formation du tartre ou d'agents detartreurs dans ou liquide formant du tartre, caractérisé par au moins une conduite d'écoulement, où se trouve un circuit expérimental, au moins un moyen adapté pour fournir un flux constant d'un liquide formant du tatre à partir d'un récipient de stockage au circuit expérimental par la conduite d'écoulement à un débit donné, au moins un moyen adapté pour ajouter des produits chimiques au liquide, au moins un moyen adapté pour mesurer de façon continue la pression d'entrée dans le circuit expérimental pendant une durée pré-déterminée et un moyen adapté pour enregistrer les valeurs de pression mesurées à une température contrôlee.

2. Appareil selon la revendication 1, caractérisé en ce que le circuit expérimental est un tube expérimental capillaire.

3. Appareil selon la revendication 2, caractérisé en ce que le tube expérimental a 1 mètre de longueur et A un diamètre interne de 1 mm.

4. Appareil selon l'une quelconque des revendications 1—3, caractérisé par un bain thermo-statique dans lequel le circuit expérimental est placé.

5. Appareil selon l'une quelconque des revendications 1—4, caractérisé par un moyen adapté pour ajuster le temps pendant lequel on mesure et on enregistre la pression d'entrée.

6. Procédé pour tester l'efficacité et le comportement d'inhibiteurs de la formation du tartre dans un liquide formant du tartre, caractérisé par les étapes consistant à fournir à un débit donné le liquide à travers une conduite d'écoulement, dans laquelle est disposé un circuit expérimental, à mesurer et à enregistrer de façon continue la pression d'entrée dans le circuit expérimental pendant une durée prédéterminée à une température contrôlée, obtenant ainsi des données qui représentent la tendance d'entartrement du liquide dans le circuit expérimental, ajouter ultérieurement les produits chimiquies à tester à des concentrations différentes successives au liquide, à chaque addition mesurer et enregistrer de façon continue la pression à une longueur prédéterminée de la conduite d'écoulement, laquelle longueur sert de circuit expérimental, à une température contrôlée pendant une durée pré-déterminée, obtenant ainsi un ensemble de données qui représentent la tendance d'entartrement du liquide dans le circuit expérimental après que les produits chimiques aient été ajoutés.

7. Procédé selon la revendication 6, caractérisé par l'étape consistant à comparer les résultats obtenus après addition de produits chimiques avec les données du liquide "témoin" (c'est-à-dire un liquide bien défini avec un comportement d'entartrement reproductible à l'intérieur d'une certaine durée), lesquelles données sont des données de référence.

8. Procédé selon l'une des revendications 6 et 7, caractérisé en ce qu'on ajoute une dose d'un produit chimique au liquide "témoni" (c'est-à-dire un liquide bien défini avec un comportement d'entartrage reproductible à l'intérieur d'une certaine durée) pour accroître la tendance d'entartrement dudit liquide.

9. Procédé selon la revendication 8, caractérisé en ce qu'on ajoute au liquide une dose de 50 mg/litre d'ions carbonate. ·

10. Procédé selon l'une quelconque des revendications 6—9, caractérisé en ce que les produits chimiques à tester sont successivement ajoutés à des concentrations situées dans un intervalle de 0—20 mg/litre.

11. Procédé pour tester l'efficacité et le comportement des agents détartreurs dans un liquide formant du tartre, caractérisé par les étapes consistent à fournir à un débit déterminé le liquide à travers une conduite d'écoulement, comprenant un circuit expérimental, puis à enlever le tartre dans le circuit expérimental après que ledit tartre ait été déposé par le liquide, en ajoutant des produits chimiques appropriés au circuit expérimental et à chaque addition mesurer et enregistrer de façon continue la baisse de pression dans le circuit expérimental, obtenant un ensemble de données qui représentent la tendance de détartrage du liquide.

12. Procédé selon la revendication 11, caractérisé en ce que les produits chimiques ajoutés sont des éthercouronnes.

13. Procédé selon la revendication 6 comprenant l'étape consistant à tester la compatibilité des inhibiteurs de la formation du tartre avec d'autres produits chimiques.

## Patentansprüche

1. Vorrichtung zur Untersuchung der Wirksamkeit und Leistungsfähigkeit von Kesselstein-Hemmstoffen oder Kesselstein-Entfernern in einer Kesselstein bildenden Flüssigkeit, gekennzeichnet, durch zumindest eine Flüssigkeitsleitung, in der eine Prüfleitung vorhanden ist, zumindest ein Mittel, das geeignet ist, eine konstante Strömungsgeschwindigkeit einer Kesselstein bildenden Flüssigkeit von einem Vorratskessel zu der Prüfleitung durch die Strömungsleitung mit einer vorgegebenen Fließgeschwindigkeit zu liefern, zumindest ein Mittel, das geeignet ist, Chemikalein zu der Flüssigkeit zuzusetzen, zumindest ein Mittel, das geeignet ist, kontinuierlich den Eintrittsdruck in die Prüfleitung während einer vorbestimmten Zeit zu messen, und Mittel, die geeignet sind, die gemessenen Druckwerte bei einer geregelten Temperatur aufzuzeichnen.

2. Vorrichtung nach Anspruch 1, dadurch gekennzeichnet, daß die Prüfleitung ein Kapillarrohr ist.

3. Vorrichtung nach Anspruch 2, dadurch gekennzeichnet, daß das Kapillarrohr 1 m lang ist und einen Innendurchmesser von 1 mm besitzt.

4. Vorrichtung nach einem der Ansprüche 1 bis 3, dadurch gekennzeichnet, daß ein thermostatisches Bad vorgesehen ist, in dem sich die Prüfleitung befindet.

5. Vorrichtung nach einem der Ansprüche 1 bis 4, gekennzeichnet, durch Mittel, die geeignet sind, die Zeit einzustellen, während der der Einlaßdruck gemessen und aufgezeichnet wird.

6. Verfahren zur Untersuchung der Wirksamkeit und Leistungsfähigkeit von Kesselstein-Hemmstoffen in einer Kesselstein bildenden Flüssigkeit, gekennzeichnet, durch die Stufen, daß man mit einer vorgegebenen Fließgeschwindigkeit die Flüssigkeit durch eine Flüssigkeitsleitung führt, in der sich eine Prüfleitung befindet, kontinuierlich den Eintrittsdruck in die Prüfleitung während einer vorbestimmten Zeit bei geregelter Temperatur mißt und so Daten erhält, die die Neigung zur Kesselsteinbildung der Flüssigkeit in der Prüfleitung anzeigen, anschließend die zu untersuchenden Chemikalein in nach und nach verschiedenen Konzentrationen zu der Flüssigkeit zugibt und bei jeder Zugabe kontinuierlich den Druck auf eine bestimmte Länge der Flüssigkeitsleitung, wobei diese Länge als Prüfleitung dient, bei geregelter Temperatur während einere vorbestimmten Zeit mißt und aufzeichnet und so eine Reihe von Daten erhält, die die Neigung der Kesselsteinbildung der Flüssigkeit in der Prüfleitung zeigen, nachdem Chemikalein zugesetzt worden sind.

7. Verfahren nach Anspruch 6, gekennzeichnet, durch die Stufe des Vergleiches der erhaltenen Ergebnisse nach Zusatz von Chemikalien mit den Daten der "Blind" probe (d.h. einer genau definierten Flüssigkeit mit reproduzierbarer Kesselsteinbildung innerhalb einer bestimmten Zeit), die Vergleichsdaten darstellen.

8. Verfahren nach Anspruch 6 oder 7, dadurch gekennzeichnet, daß eine Menge einer chemischen Substanz zu der "Blind" proben Flüssigkeit (d.h. einer gut difinierten Flüssigkeit mit reproduzierbarer Kesselsteinbildung innerhalb einer bestimmten Zeit) zugesetzt wird, um die Neigung zu Kesselsteinbildung dieser Flüssigkeit zu erhöhen.

9. Verfahren nach Anspruch 8 dadurch gekennzeichnet, daß eine Menge von 50 mg/l Carbonationen zu der Flüssigkeit zugesetzt wird.

10. Verfahren nach einem der Ansprüche 6 bis 9, dadurch gekennzeichnet, daß die zu untersuchenden Chemikalien nacheinander in Konzentrationen in Bereich von 0 bis 20 mg/l zugesetzt werden.

11. Verfahren zur Untersuchung der Wirksamkeit und Leistungsfähigkeit von Kesselstein-Entfernern in einer Kesselstein bildenden Flüssigkeit, gekennzeichnet dadurch, daß man die Flüssigkeit mit einer vorbestimmten Fließgeschwindigkeit durch eine Flüssigkeitsleitung, die eine Prüfleitung umfaßt, führt anschließend den Kesselstein in der Prüfleitung eintfernt nachdem der Kesselstein aus der Flüssigkeit abgeschieden worden ist, durch Zusatz geeigneter Chemikalein zu der Prüfleitung und bei jeder Zugabe kontinuierlich die Druckabnahme in der Prüfleitung mißt und aufzeichnet, wodurch man eine Reihe von Daten erhält, die die Neigung zur Kesselstein-Entfernung aus der Flüssigkeit anzeigen.

12. Verfahren nach Anspruch 11, dadurch gekennzeichnet, daß die zugesetzten Chimkalien Kronenether sind.

13. Verfahren nach Anspruch 6, umfassend die Stufe der Untersuchung der Veträglichkeit von Kesselstein-Hemmstoffen mit anderen Chemikalien.

FIG.1a

0033557

FIG.1b

FIG.2

FIG.3

FIG.4

FIG.5

FIG.6

5